# EUROPEAN PATENT APPLICATION

(11) **EP 1 798 645 A1**
(43) Date of publication of application: **20.06.2007**
(21) Application number: 05112057.4
(22) Date of filing: 13.12.2005
(51) Int. Cl.: G06F 17/30, G06F 9/46

(54) **Method and apparatus for protecting a data set**

(71) Applicant: DEUTSCHE THOMSON-BRANDT GMBH, 78048 Villingen-Schwenningen (DE)
(72) Inventor: Hepper, Dietmar, 30419 Hannover (DE); Blawat, Meinolf, 30659 Hannover (DE); Li, Hui, 30539 Hannover (DE)
(74) Representative: Rittner, Karsten

(57) **Abstract**

In distributed storage networks, access to a certain piece of data content that is stored on a first node A may be tried simultaneously or nearly simultaneously by different nodes B,C. E.g. while a user who launched from a second node B a search process on the first node A is viewing the search result, and considering whether or not to access a particular piece of data content, another user may try to delete it.

A method for protecting a data set comprises detecting that the data set is subject to a search operation, locking the data set, detecting a specified event such as elapse of a specified time, and upon said detecting releasing the lock. Further, the relevance of the data set with respect to the search operation can be determined, and the locking is only performed for relevant data sets.

## Description

### Field of the invention

This invention relates to a method and an apparatus for protecting a data set, wherein in particular the data set is subject to a search operation.

### Background

In storage systems in general, and distributed storage systems in particularly, which may be e.g. peer-to-peer or client-server based, access to a certain piece of data content that is stored on a certain node A in the network may be tried simultaneously or nearly simultaneously by different nodes B and C. E.g. a user operating a node B may search content and find it on node A. While the user is viewing the search result and considering whether or not to access that piece of data content, e.g. read it or record it on his node B, another user, e.g. from a third node C, may want to delete it, for obtaining more free storage capacity or similar. Since for the first user this particular piece of data content may be relevant with respect to the search, a following access (e.g. a transfer to node B) is a probable intention when searching for content. However, if the user of node C is faster, he may delete the piece of content before the user of node B has instructed the system to open or transfer it to node B for viewing, editing, recording or the like.

### Summary of the Invention

The problem to be solved by the invention is to overcome this situation. According to an aspect of the invention, the piece of data content is locked for a certain amount of time T after it has been located by a content search task, e.g. for T=2 minutes. The lock refers to any action that may have the effect that the owner of the search task cannot obtain the information that was searched for, e.g. the lock refers to deleting, moving, renaming, modifying etc. of the piece of data content. In one embodiment, other users still have read access to the relevant files, as long as the owner of the search task may access the files. In another embodiment however the relevant files are locked completely for other users, so that the user who owns the lock may freely edit, rename or delete the files.

As a precaution, it is possible to lock all pieces of data content, e.g. files, which were considered by the search task, until the relevance of the file with respect to the search is determined. Depending on the search process, the relevance of a file may be determined immediately or after a while, e.g. after other files were also investigated. Then only the relevant, or the most relevant files remain locked for a certain time T.

If node A in the above example contains the piece of content that was searched for by the user via node B, and node A locks it now for a certain time in response to the search, the user at node B will have this amount of time to decide whether or not to access or transfer the content somewhere else for recording or playback etc. If another user via node C tries during this time to delete the same piece of content, he will be notified that deletion is prohibited. So node C may try again later, after the time T has passed. The duration of time T may be system-specific, so that it is known to all nodes. The duration may still be individually determined, based e.g. on the relevance of a file for the search and/or the length of the result list.

Exemplary embodiments of the invention involve a table for marking pieces of content that are relevant for a search process and the time or duration of their deletion being prohibited or allowed respectively.

Advantageous embodiments of the invention are disclosed in the dependent claims, the following description and the figures.

### Brief description of the drawings

Exemplary embodiments of the invention are described with reference to the accompanying drawings, which show in
Fig.1 the structure of a network with distributed storage devices;
Fig.2 locking a relevant file via metadata tag;
Fig.3 locking a relevant file via access list; and
Fig.4 a flow diagram of a method for automatically locking and releasing a file.

### Detailed description of the invention

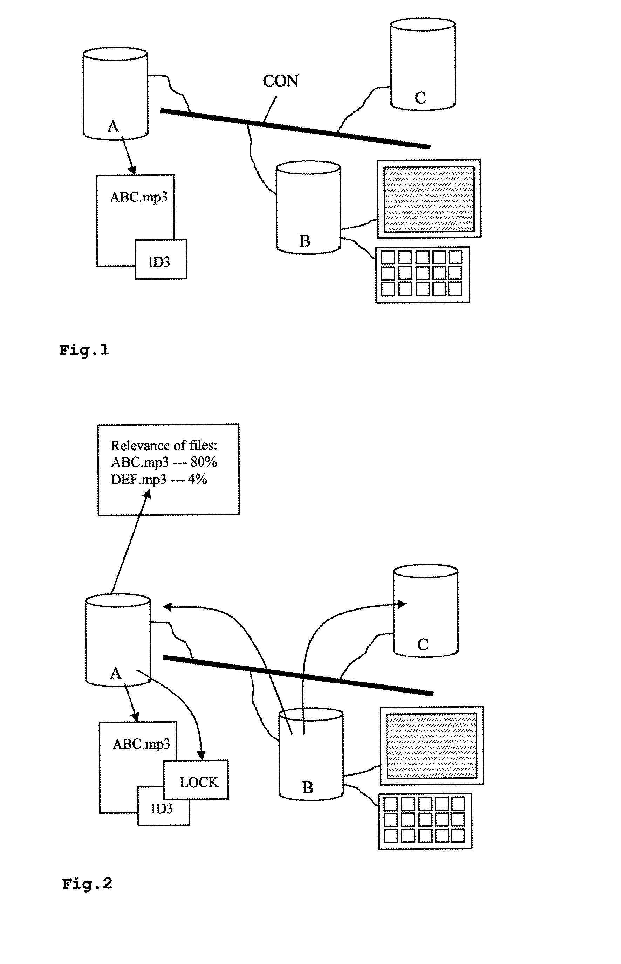

Fig.1 shows a general network with devices A,B,C that serve as storage nodes and that are interconnected CON. A user being connected to the node B may, e.g. via text input, search for a certain piece of data, e.g. a particular music file ABC.mp3. The node B launches a search request over the network, which is transmitted to the other nodes B,C of the network. The search request may e.g. contain a file name or text that is included in a metadata tag ID3 associated to the sought music file ABC.mp3. The search is in this embodiment run as a separate process on the devices, and the search process executing on node A locates the sought file within the storage of node A.

According to the invention, the located piece of content is, while and after determining its relevance, locked against deletion for a certain amount of time T after it has been located by the search process. Therefore, the user at node B who launched the search request will have this amount of time to decide whether or not to access the located file. This may mean e.g. to transfer it to node B (or another node within the network, e.g. a display that is configured as a separate node) for recording or playback etc. The user can also use the time T to set the file to read-only. However, in distributed networks in which e.g. the nodes are spread over a wide area, the user will usually transfer the content data to a node next to him.

Consequently, if another user via node C tries to delete the same piece of content that was searched for by the user via node B, this operation is blocked during the specified time T. Node C may try again later. After the time T has passed, the piece of content data is unlocked again, and accessible to other users and/or applications as usual.

Different possibilities exist for implementing the search related lock mechanism according to the invention.

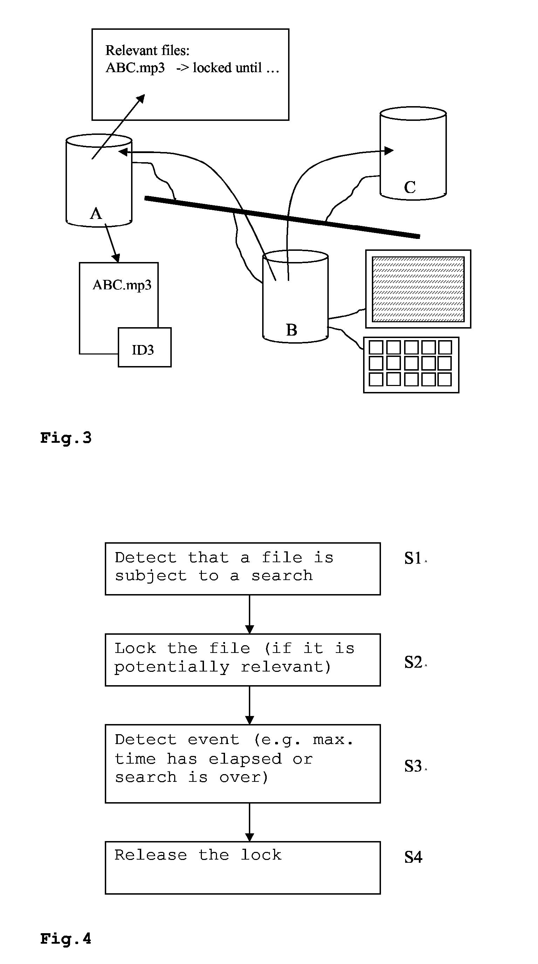

In one embodiment, node A has a table that contains for each of its files that has been found relevant by a search process the time at which the file is unlocked again. This is shown in Fig.3. The time may refer to the nodes local system time, network system time or similar. Alternatively, the time may be a relative time given by a countdown timer that is started by a signal coming from the search process. An individual timer for each relevant file may be employed if the assigned time is individual. In another embodiment, two or more files that are assigned the same time T share the same timer. In yet another embodiment, two or more files that are assigned the same time T share the same timer only if the assignment is done within a defined time frame. The time frame is selected such that it is typically sufficient for the search task to locate the files, e.g. 300 or 500 ms.

Further, the table may contain an ID (ContentID) of the piece of content and its location (LocationID) along with the time at/after which the content may be deleted, moved, modified etc.

In one embodiment, if the search task has lead to finding and locating the content at time t0, the time t0+T is entered into the table. If the owner of the search task initiates a content transfer (or copy) task before t0+T has passed, nodes A and B perform or schedule this transfer, and the content is locked against deletion until the transfer has ended. Then, in one embodiment node A deletes the entry from the table. In another embodiment, the entry remains until the specified time has elapsed.

In one embodiment, the table is filled while the search task is running.

In one embodiment, relevance values are entered for the files that were searched through, as shown in Fig.2. This has the advantage that the search results may be sorted by relevance in the table.

In one embodiment, the lock time asserted to a file depends on its relevance, or generally on its position within a sorted list of search results. E.g. the files that are lower in the list of search results (in the above example these are less relevant files) may get higher lock times, because the user needs more time until he can look at them when stepping through the list.

In one embodiment, variable lock times are only used when the list of relevant search results has more than a defined number of entries.

If e.g. the user searches for an audio file but remembers only a line of text, and the audio files contain ID3 tags with the corresponding song texts, the user may enter the text and search only in category "audio". Search tasks may generally refer to file categories. The single words may appear in numerous files, but in one file ABC.mp3 they have the correct order, so that this file gets the highest relevance value. In another example, an application for automatically maintaining a content list within a network searches for video files of movies that feature a certain actor, and launches a search task indicating the actors name. The task may be executed in parallel on the various nodes within the network, each searching its own storage. In this example, the search is preferably performed on metadata tags associated to each video file. However, the result list may include the video files. Thus, metadata tags that do not refer to video files are not considered by the search. Further, the result list of this particular search needs not necessarily be displayed, since the application runs automatically. If a metadata tag indicates the actors name in a key role, the corresponding file may get the highest relevance, if it is not a key role the relevance may be lower and if the person appears not as an actor but eg. as a producer, relevance may be even lower. If the persons name does not appear at all, relevance is zero.

In one embodiment, the search operation initially locks all data sets to be considered, and upon detecting that the relevance of a particular data set is below a minimum the lock for this data set is released, while the lock for a data set whose relevance is equal or above the minimum is maintained or extended. The initial lock may be independent from time, and as soon as the relevance of the data set is determined, the lock is either released if the data set is not relevant enough, or it is replaced by a lock that is released after a specified time or when the search owner has decided on a particular search result, and thus the search is over.

In one embodiment, a search tool has a file-browser-like appearance, and upon a user entering a search criterion and optionally a start directory, files and folders under the start directory are initially locked until their relevance for the search is determined. Then the locks refer only to those files that have at least a defined minimum relevance and optionally to folders that contain such files.

Collisions between search tasks of different users may occur. In this case, it is advantageous if a lock initiated by a search task never prevents other users (or their search tasks) from reading the content, so that two or more different search tasks may investigate a particular file simultaneously, and both may lock the file if it is relevant.

In one embodiment, a process identifier or user identifier of the search task or its owner is included in the list, so as to determine who "owns" the lock. The lock owner may then have during the predetermined time T more access rights to the file than other users/applications. In this embodiment, more than one lock may be set for each file. If two search tasks of a first and a second user have locked a file, and one of the users tries to delete, move, edit etc. the file, the other lock may prevent this, or at least will notify the other user.

In another embodiment however the lock is unspecific, and refers only to a time. In this case, the lock may either be retriggered, or the file is "double-locked". In the latter case, none of the users may delete, rename/move or edit a "double-locked" file. Retriggering means that a lock that is already running is reset to its full duration. E.g. a lock that runs over 1 min has only 10 sec left, and another search task retriggers it to 1 min again.

If node A reveives a deletion request before t0+T has passed, the node A checks this request against the table, and if the current system time t is less than t0+T then it rejects the deletion request.

When the time t0+T has passed, the table entry is deleted. If then a deletion request is received, it can be performed and answered positively.

In one embodiment, where the search is executed as separate process on each node and communication between the nodes is based on messages, a value indicating the duration of time T is communicated as a parameter in the search request message together with the search criterion. Also a value of T=0 can be sent (or no value for T at all), so that the content is not locked.

In one embodiment, if node A receives a deletion request for a locked file before t0+T has passed, it will wait until t=t0+T, then respond to the request and delete the content, unless the deletion task has been cancelled in the meantime or another task has been set up that now has blocked the content against deletion.

In one embodiment, deletion is allowed for the node that initiated the search task which lead to blocking the content, i.e. the blocking refers only to others. So, if node B sends a delete request to A within or after t0+T, it will be performed and answered accordingly.

In one embodiment, dedicated messages are used for locking a piece of content against deletion etc., either for a certain amount of time or permanently until the locking is cancelled by means of an "unlock" message. In this case however, the lock message is initiated by a search request. In one embodiment, the unlock message has a temporal correlation with the lock message. It may also be initiated by the search request. E.g. the unlock message may be sent when the user has decided on a piece of content, i.e. has selected an item from the list of search results or closed the search result window.

Further, the node that requests or performs a deletion may notify, e.g. by means of a respective information message, the other node that requested the search. The notification contains the information that the file is scheduled for an action, e.g. deletion, so that the user who initiated the search may realize that someone else intends to access this file.

A reasonable lock time T may be between 1 and 10 minutes, depending on the actual application and probability of the lock to be used. Therefore in one embodiment the invention uses control parameters that can automatically be set according to the actual situation with respect to the search, e.g. lock time or lock time range depending on relevance, lock time range depending on length of the search result list, minimum relevance required for locking a file etc. If the list of search results tends to be long, e.g. for networks that allow access to thousands of files, the lock time T may be relatively long. On the other hand, if there are usually many users connected to the network, the parameters should be set accordingly: lock time may be shorter, minimum relevance for locking a file may be higher etc. E.g. the (approximate) number of accessible files may be determined automatically, and serve as parameter for setting the lock time: the more files there are, the longer the lock time.

In principle it is also possible that the search, or the evaluation of the search result, for files from a node A is performed at the requesting node B, and when a file located on the other node A is found relevant, a message is sent to node A indicating that this file should be locked, as described above. The message may also contain a plurality of files to be locked, so that network traffic is reduced. This is particularly useful in cases where not whole files are searched through, but only excerpts associated to the files, such as metadata tags that contain keywords or other key information, since in this case only the excerpts need to be transmitted to the node that actually performs the search, and network traffic is kept low.

In one embodiment of the invention, the search process is executed automatically. In another embodiment however the invention is usable for supporting manual searching. In this case, a user may use e.g. a file browser to select a particular set of files, e.g. a particular folder and/or files of a specified type. According to this embodiment, the selected files are automatically protected against deletion etc. for a specified time upon determining that they are selected.

When a search task owner has decided on a piece of content by selecting it from the list of search results, the still existing locks of the other files on the list can be released before their lock time T has passed. In one embodiment, this is done immediately upon detecting that an item on the search list has been selected. In another embodiment, this is done when an action is performed on an item in the list, such as transfer, editing, moving or reading the file. This action may set another lock on the file, which can be used as signal for releasing the other locks. In another embodiment however, the user has two options for accessing an item from the list, either for "viewing" so as for checking whether this file is what was searched for, or for finally selecting it. The first option has no impact on locks, while the second option cancels the locks on other files from the list.

In one embodiment, the search process accesses only placeholder files, such as excerpt or summary files associated to the actual content, e.g. metadata tags. In one embodiment, the lock refers to the placeholder file rather than to the actual content. In one embodiment, an indication is stored within the placeholder file or the actual content, indicating the lock or the lock time. The search process however knows which file is currently searched through and collects the search results.

Advantageously, the deletion or modification of a piece of content that is subject to a search, and therefore might be used or accessed soon (in terms of human perception), is prevented by the invention.

The invention is advantageous for networks of devices that contain storage, such as hard-disk drives (HDD), memories, cache, exchangeable/removable media such as optical discs, etc.

## Claims

1. A method for protecting a data set, comprising
- detecting (S1) that a data set is subject to a search operation, wherein the search operation searches according to a defined search criterion among a plurality of data sets;
- locking the data set (S2);
- detecting a specified event (S3); and
- upon said detecting, releasing said lock (S4).

2. Method according to claim 1, further comprising the step of determining the relevance of the data set with respect to the search operation, wherein the locking is only performed if the data set has a specified minimum relevance.

3. Method according to claim 1 or 2, wherein the specified event for releasing the lock is initiated by the selection of a particular search result.

4. Method according to claim 1 or 2, wherein said specified event for releasing the lock indicates that a specified time has elapsed since detecting that the data set is selected, or detecting that the data set is relevant with respect to the search operation.

5. Method according to the preceding claim, wherein the specified time depends on the relevance of the data set with respect to the search operation.

6. Method according to claim 4 or 5, wherein the specified time depends on the number of data sets that are searched through.

7. Method according to claim 4 or 5, wherein the specified time depends on the number of data sets that are determined to be relevant.

8. Method according to any one of the preceding claims, wherein the locking indicates a lock owner and prevents at least deletion of the data set by others than the lock owner.

9. Method according to any one of the preceding claims, wherein the data sets on which the search operation is performed are associated to other data sets holding the actual content, and the search result indicates the other data sets holding the actual content.

10. Method according to any one of the preceding claims, wherein the search operation is requested by a first network node (B) and executed by a different second network node (A), wherein the second network node (A) has storage means and searches through data sets stored on this storage means.

11. Method according to the preceding claim, wherein the first and/or the second network node generates a table or list of relevant data sets, the list containing for each of the relevant data sets an indication of its relevance.

12. Method according to any of the preceding claims, wherein the search operation initially locks all data sets to be considered, and upon detecting that the relevance of a particular data set is below a minimum the lock for this data set is released, while the lock for a data set whose relevance is equal or above the minimum is maintained or extended.

13. Apparatus for protecting a data set, comprising
- means for detecting that a data set is subject to a search operation, wherein the search operation searches according to a defined search criterion among a plurality of data sets;
- means for locking the data set;
- means for detecting a specified event; and
- means for releasing said lock upon said detecting.

14. Apparatus according to the preceding claim, further comprising means for determining the relevance of the data set with respect to the search operation, wherein the locking is only performed if the data set has a specified minimum relevance.
